# EUROPEAN PATENT APPLICATION

(11) **EP 3 626 442 A1**
(43) Date of publication of application: **25.03.2020**
(21) Application number: 18275147.9
(22) Date of filing: 20.09.2018
(51) Int. Cl.: B29D 99/00, B29C 35/08, B29C 33/38, B33Y 80/00, B29C 65/48, B29L 31/26, B29L 31/30, B29L 31/00, B64C 3/34

(54) **METHOD AND APPARATUS FOR PRODUCING A SEAL**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The invention relates to a method of producing a seal (700) for sealing a structure, for example an aircraft fuel tank. The method comprises: providing a mould having a mould cavity, the mould cavity having the desired shape of the seal (700); introducing a sealant into the mould cavity, the sealant being an electromagnetic radiation curing sealant; and illuminating the sealant with electromagnetic radiation by causing electromagnetic radiation to pass through at least a part of the mould onto the sealant within the mould cavity, thereby curing the sealant within the mould cavity and producing the seal.

The invention also relates to a corresponding apparatus for producing a seal.

## Description

### FIELD OF THE INVENTION

The present invention relates to methods and apparatuses for applying seals to structures.

### BACKGROUND

Many aircraft comprise fuel tanks in the aircraft wings defined by structural portions of the wings such as wing spars and wing skins.

It tends to be critical for the fuel tanks to be effectively sealed to prevent the unwanted introduction into the fuel tanks of water, foreign bodies, and contaminants, and also to prevent fuel leaking from the fuel tanks. Fuel tanks may include over-seals that are applied over aircraft fasteners within the fuel tanks, and also seals along the interface between the structural members that define the fuel tanks.

Conventionally, the sealing of aircraft fuel tanks is a manual process in which a flowable sealant is injected or dispensed from a dispenser onto a desired area of the aircraft. This sealant may be manipulated, for example "smoothed out", using a brush or other tool.

Different features within aircraft fuel tanks may be sealed in different ways. For example, it may be desirable to seal different areas with different thicknesses of sealant, or with different types of sealants (e.g. sealants having different compositions). To provide this, an aircraft wing tank may be sealed by applying sealant(s) in multiple layers or stages, with each layer or stage being cured before a subsequent layer or stage is applied. Sealants used to seal aircraft wing tanks may require many hours to fully cure. Thus, the sealing operation may be a lengthy process.

It is known to apply individual, pre-moulded caps over fastener heads to seal fastener heads in an aircraft fuel tank.

### SUMMARY OF THE INVENTION

In a first aspect, the present invention provides a method of producing a seal for sealing a structure. The method comprises: providing a mould having a mould cavity, the mould cavity having the desired shape of the seal; introducing a sealant into the mould cavity, the sealant being an electromagnetic radiation curing sealant; and illuminating the sealant with electromagnetic radiation by causing electromagnetic radiation to pass through at least a part of the mould onto the sealant within the mould cavity, thereby curing the sealant within the mould cavity and producing the seal.

The electromagnetic radiation may comprise ultraviolet or visible light.

At least a part of the mould may be a transparent or translucent member.

The illuminating may comprise illuminating the mould with the sealant therein from multiple different directions.

Providing the mould may comprise: measuring a surface of the structure; using the measurements of the surface, creating a digital model of the mould; and, using the digital model of the mould, producing the mould. Providing the mould may comprise: using the measurements of the surface, creating a digital model of a first mould part having a surface that is substantially the same shape as the measured surface; creating a digital model of a second mould part, wherein the digital model of the first mould part and the digital model of the second mould part define a digital representation of the mould cavity; using the digital model of the first mould part, producing a physical first mould part; and, using the digital model of the second mould part, producing a physical second mould part. Providing the mould may comprise performing an additive manufacturing process to fabricate the mould using one or more digital models.

The mould may define one or more features selected from the group of features consisting of mating surfaces, landings, and housings for receiving other entities, such that the seal comprises the one or more features.

The structure may be a wall of an aircraft fuel tank comprising multiple structural components attached together by a plurality of fasteners.

The method may further comprise attaching the seal to the structure, thereby to seal the structure. Attaching the seal to the structure may comprise applying an adhesive between the seal and the structure, and subsequently curing the adhesive. The adhesive may be a time-curable adhesive.

In a further aspect, the present invention provides a seal, e.g. in the form of a seal mat, produced in accordance with the method of any preceding aspect.

In a further aspect, the present invention provides an apparatus for producing a seal for sealing a structure. The apparatus comprises: a mould having a mould cavity, the mould cavity having the desired shape of the seal; means for introducing a sealant into the mould cavity, the sealant being an electromagnetic radiation curing sealant; and a source of electromagnetic radiation for illuminating the sealant with electromagnetic radiation by causing electromagnetic radiation to pass through at least a part of the mould onto the sealant within the mould cavity, thereby to cure the sealant within the mould cavity and produce the seal.

The apparatus may further comprise means for producing the mould. The means for producing the mould may comprise: a three-dimensional scanner for measuring the surface of the structure; one or more processors for, using the measurements of the surface, creating a digital model of the mould; and additive manufacturing apparatus configured to, using the digital model, produce the mould.

### BRIEF DESCRIPTION OF THE DRAWINGS

Figure 1 is a schematic illustration (not to scale) of an example aircraft;
Figure 2 is a schematic illustration (not to scale) showing a side view cross section of a joint structure or interface on the aircraft;
Figure 3 is a process flow chart showing certain steps of a sealing process for sealing the joint structure;
Figure 4 is a schematic illustration (not to scale) showing a side view cross section of a digital model of a surface of the joint structure;
Figure 5 is a schematic illustration (not to scale) showing a side view cross section of a digital model of a mould;
Figure 6 is a schematic illustration (not to scale) showing a side view cross section of a physical mould;
Figure 7 is a schematic illustration (not to scale) showing a side view cross section of a seal; and
Figure 8 is a schematic illustration (not to scale) showing a side view cross section of the seal applied to the joint structure

### DETAILED DESCRIPTION

It will be appreciated that relative terms such as horizontal and vertical, top and bottom, above and below, front and back, and so on, are used above merely for ease of reference to the Figures, and these terms are not limiting as such, and any two differing directions or positions and so on may be implemented rather than truly horizontal and vertical, top and bottom, and so on.

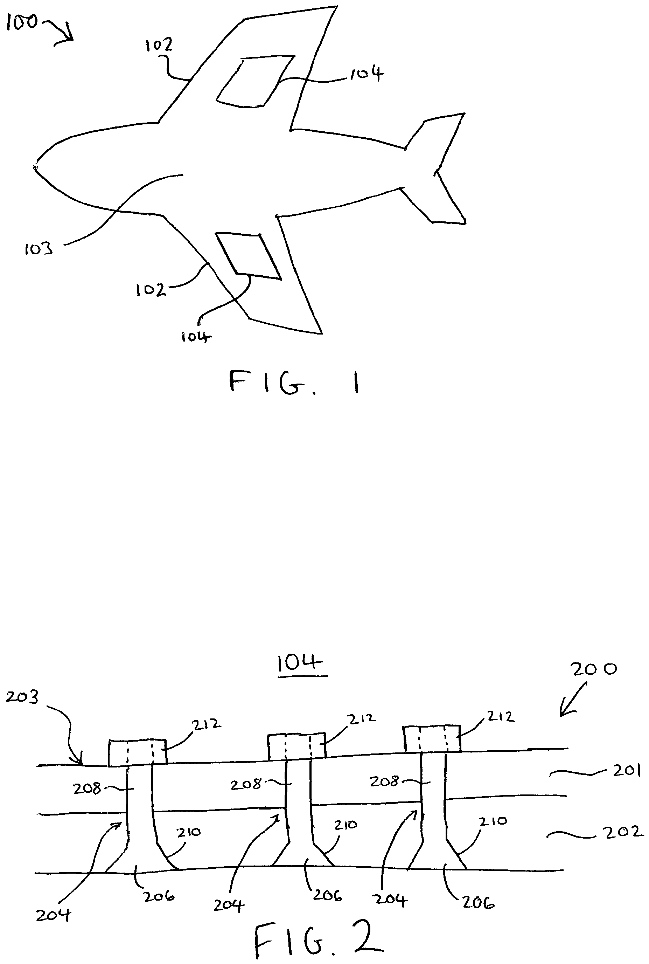

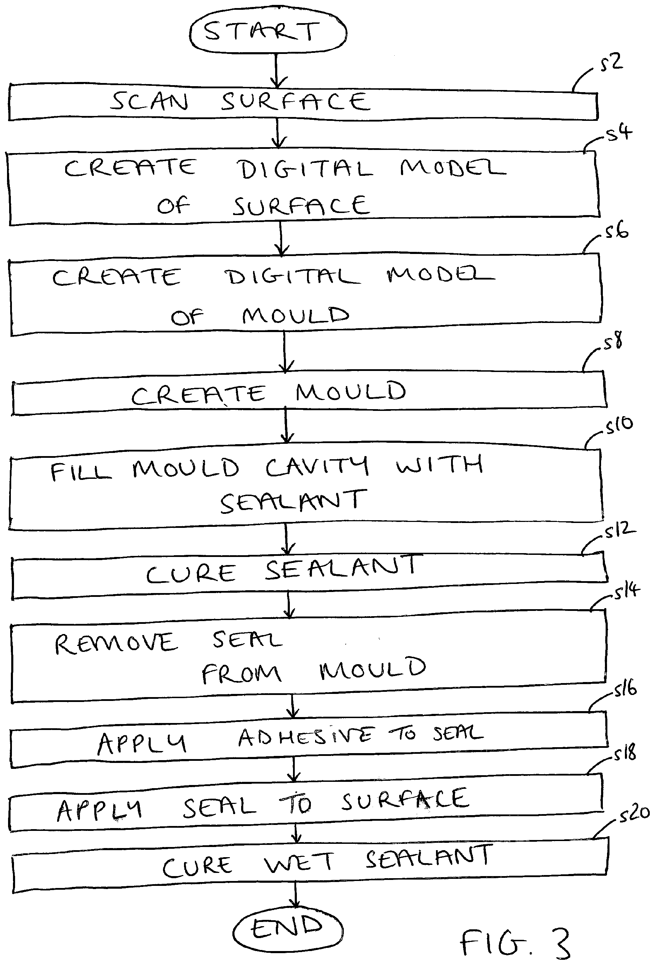

Figure 1 is a schematic illustration (not to scale) of an example aircraft 100 that will be used to illustrate an embodiment of a sealing process. An embodiment of the sealing process is described in more detail later below with reference to Figure 3.

The aircraft 100 comprises a pair of wings 102 faired into a fuselage 103. Each wing 102 carries an engine (not shown in Figure 1) and an internally located fuel tank 104. The fuel tanks 104 are configured to store aircraft fuel and provide that fuel to the engines.

In this example, the fuel tanks 104 are defined by structural portions or structural members of the wings 102 such as wing spars and wing skins. More specifically, the structural members of the aircraft wings 102 are arranged and fastened together to form the wings 102, and to define one or more volumes or cavities within each of the aircraft wings 102. These volumes or cavities are the aircraft fuel tanks 104.

The structural members of the aircraft wings 102 are attached together at interfaces or joints between those structural members. In this example, the structural members are fastened together by a plurality of fasteners.

Figure 2 is a schematic illustration (not to scale) showing a side view cross section of a joint structure or interface 200. The joint structure 200 comprises a joint between a first aircraft structural member 201 and a second aircraft structural member 202.

The first aircraft structural member 201 may be, for example, a wing spar which extends longitudinally along at least part of an aircraft wing 102.

The second aircraft structural member 202 may be, for example, an external wing skin.

In the orientation of Figure 2, a lower surface of the first aircraft structural member 201 is engaged flush against an upper surface of the second aircraft structural member 202. The second aircraft structural member 202 has lower surface that may define an outer surface of the aircraft 100.

The first aircraft structural member 201 and the second aircraft structural member 202 are secured together by means of a plurality of fasteners 204. The fasteners 204 may be an aligned, regularly spaced series of fasteners 204 extending longitudinally along a length of the joint structure 200. Although, for ease of depiction and clarity, Figure 2 shows only three fasteners 204, it will be understood by those skilled in the art that, in practice, typically, more than three fasteners will be used to secure together the structural members 201, 202.

In this example, each fastener 204 comprises a head 206 and an externally threaded shank 208. For each fastener 204, the head 206 of that fastener 204 engages a lower surface of the second aircraft structural member 202, and is located within a respective countersink 210 in the second aircraft structural member 202. For each fastener 204, the threaded shank 208 of that fastener 204 extends through the second aircraft structural member 202 and through the first aircraft structural member 201, and extends upwards from the upper surface of the first aircraft structural member 201. Each fastener 204 further comprises an internally threaded bolt 212 threadedly engaged with the externally threaded shank 208, the bolt 212 bearing against the upper surface of the first aircraft structural member 201 to provide clamp-up between the first aircraft structural member 201 and the second aircraft structural member 202.

In this embodiment, an aircraft fuel tank 104 is in the region above an upper surface 203 of the joint structure 200. In other words, a boundary of the fuel tank 104 is defined by the upper surface 203 of the joint structure 200. The upper surface 203 of the joint structure is defined by the upper surface of the first aircraft structural member 201, and the upper surfaces of the fasteners 204.

Figure 3 is a process flow chart showing certain steps of an embodiment of a sealing process. In this embodiment, the sealing process is implemented to seal the upper surface 203 of the joint structure 200, thereby to prevent or oppose leakage into or from the fuel tank 104.

At step s2, a three-dimensional (3D) scanner is used to scan (i.e. measure) the upper surface 203 of the joint structure 200. Examples of appropriate 3D scanners include, but are not limited to, industrial computed tomography scanners, structured-light 3D scanners, and laser scanners.

At step s4, a computer processes the measurements taken by the 3D scanner to create a digital 3D model of the upper surface 203 of the joint structure 200.

In some embodiments, a digital model of the seal that is to be fitted to the upper surface 203 is also created. The digital model of the seal tends to facilitate ensuring efficient coverage of the components of the upper surface 203 and uniform profiling of the sealant gasket.

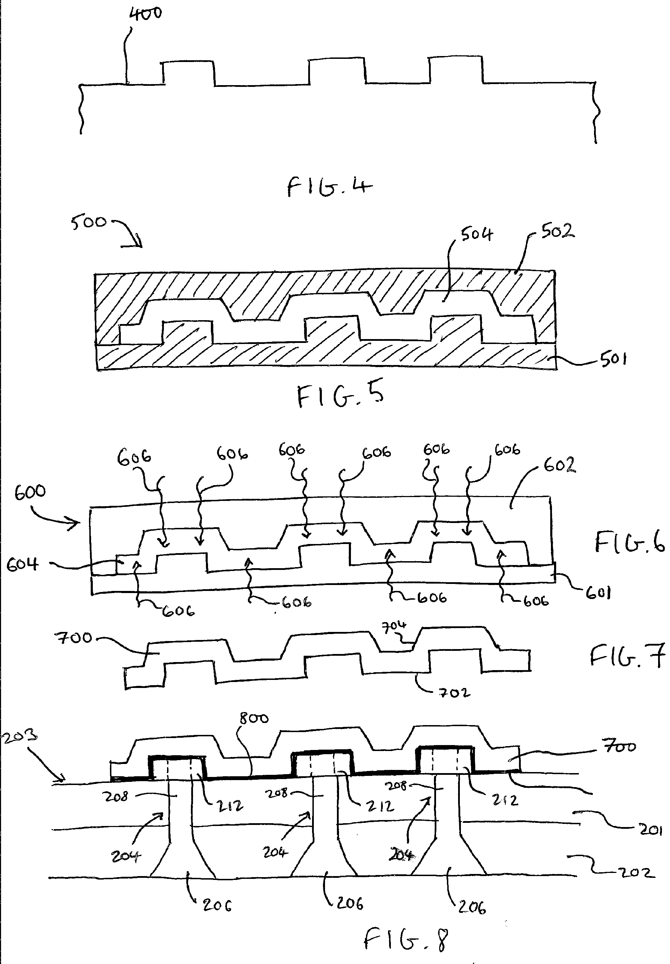

Figure 4 is a schematic illustration (not to scale) showing a side view cross section of the digital 3D model 400 of the upper surface 203 of the joint structure 200.

The portion of the digital model 400 shown in Figure 4 corresponds to the portion of the joint structure 200 shown in Figure 2.

At step s6, a user operates the computer to create a digital 3D model of a mould.

Figure 5 is a schematic illustration (not to scale) showing a side view cross section of the digital 3D model of the mould 500.

In this embodiment, the digital model of the mould 500 comprises a digital 3D model of a first, lower mould part 501 and a digital 3D model of a second, upper mould part 502.

The digital model of the second mould part 502 is located above the digital model of the first mould part 501. More specifically, an edge portion of the lower surface of the digital model of the second mould part 502 contacts a portion of the upper surface of the digital model of the first mould part 501. Also, central portions of the digital models of the first and second mould parts 501, 502 are spaced apart such that digital representation of a volume or cavity 504 is defined therebetween.

In this embodiment, the upper surface of the digital model of the first mould part 501 is substantially the same shape as the digital 3D model 400 of the upper surface 203. The digital model of the first mould part 501 may be created using the measurements of the upper surface 203 of the joint structure 200 taken by the 3D scanner.

In this embodiment, the digital model of the second mould part 502 is specified or created by a user, based on the digital model of the first mould part 501, such that the digital cavity 504 defined between the digital models of the mould parts 501, 502 has the shape, size, and position (e.g. relative to the digital model of the first mould part 501/upper surface 203) as a desired sealing member for sealing the upper surface 203 of the joint structure 200 to prevent or oppose leakage into or from the fuel tank 104.

Any appropriate software tool may be utilised by the user operating the computer to create the digital models of the first and second mould parts 501, 502.

At step s8, an additive manufacturing (AM) apparatus performs an AM process using the digital models 501, 502 to create a physical mould. In particular, the digital model of the first mould part 501 is used to fabricate a physical first mould part. Also, the digital model of the second mould part 502 is used to fabricate a physical second mould part.

Figure 6 is a schematic illustration (not to scale) showing a side view cross section of the physical mould 600 created at step s8. The mould 600 comprises a first mould part 601 and a second mould part 602. The first mould part 601 is as specified by the digital model of the first mould part 501. The second mould part 602 is as specified by the digital model of the second mould part 502.

The portion of the mould 600 shown in Figure 6 corresponds to the portion of the digital model 500 shown in Figure 5.

Any appropriate AM apparatus performing any appropriate AM process may be used to create the mould 600.

In this embodiment, the mould 600 is a substantially transparent object. For example, each mould part 601, 602 may be made of a substantially transparent plastic. The mould parts 601, 602 may be clear, colourless objects. In some embodiments, each of the mould parts 601, 602 may be a translucent object.

In this embodiment, each of the mould parts 601, 602 is configured to allow the passage therethrough of electromagnetic radiation, including at least ultraviolet (UV) electromagnetic radiation. One or both of the mould parts 601, 602 may allow the passage therethrough of other wavelengths of electromagnetic radiation in addition to UV electromagnetic radiation, for example visible light.

At step s10, a user positions the second mould part 602 onto the upper surface of the first mould part 601, thereby to form a mould cavity 604, therebetween, and fills that mould injects a flowable (e.g. liquid) sealant into the mould cavity 604. Thus, in this embodiment the mould cavity 604 is substantially completely filled with an uncured sealant.

In this embodiment, the mould cavity 604 has substantially the same size and shape as the digital cavity 504.

In some embodiments, the digital models of the mould parts 501, 502, and the mould parts 601, 602 produced therefrom, may comprise locator features (for example, locator pins, locator holes, etc.) that may be used to facilitate or enable the user to accurately position the two mould parts 601, 602 with respect to each other so as to properly form the correct-shaped mould cavity 604.

In some embodiments, one or both of the mould parts 601, 602 may comprise an inlet through which the flowable sealant may be introduced into the mould cavity 604.

In this embodiment, the flowable sealant that is injected into the mould cavity 604 is a UV-curable sealant, i.e. a sealant that can be cured by illuminating that sealant with UV electromagnetic radiation. An example of an appropriate UV-curable sealant is, but is not limited to, RW-6162-71 manufactured by PPG Industries, Inc.

At step s12, a source of UV electromagnetic radiation illuminates the sealant within the mould cavity 604 with UV electromagnetic radiation.

As shown in Figure 6, UV electromagnetic radiation (indicated in Figure 6 by wavy arrows and the reference numerals 606) emitted by the source of UV electromagnetic radiation passes through the transparent mould 600 and is incident on the sealant within the mould cavity 604. The UV electromagnetic radiation 606 incident on the sealant cures the sealant within the mould cavity 604 causing the sealant to harden and solidify.

In this embodiment, the sealant within the mould cavity 604 is illuminated with UV light from multiple different directions including, at least from above and from below. More preferably, the sealant is illuminated from all directions.

Thus, a solid seal, or seal member, is formed within the mould cavity 604.

At step s14, the solid seal is removed from mould 600.

Figure 7 is a schematic illustration (not to scale) of the seal 700 formed, and subsequently removed from the mould 600. The seal 700 tends to be in the form of a flexible mat.

The portion of the seal Figure 7 corresponds to the portion mould 600 shown in Figure 6.

The seal 700 has a lower surface 702 that is substantially the same shape as the upper surface of the first mould part 601, i.e. the upper surface 203 of the joint structure 200. The seal 700 has an upper surface 704 that is substantially the same shape as the lower surface of the second mould part 602.

At step s16, the user applies an adhesive to the bottom surface of the seal 700. The adhesive may be, for example, a wet sealant (i.e. a sealant in liquid form). Preferably, the adhesive is a time-cure adhesive, e.g. an adhesive that cures within a given amount of time. However, UV-curable adhesive, heat-curable adhesive, or another type of adhesive may be used instead of or in addition to the time-cure adhesive. Examples of appropriate adhesives include, but are not limited to, PR-1750 A-2, PR-1750 B-1/2, PR-1750 B-2, PR-1770 A-1/2, PR-1770 B2 AND B-1/2, and PR-1770 C 2.

At step s18, the seal 700 with the adhesive applied thereto is positioned onto the upper surface 203 of the joint structure 200.

Figure 8 is a schematic illustration (not to scale) showing a side view cross section of the upper surface 203 of the joint structure 200 with the seal 700 located thereon. The adhesive 800 is sandwiched between the joint structure 200 and the seal 700.

At step s20, the adhesive 800 is cured. The adhesive 800 may be a time-cure adhesive that may be left for a given amount of time to cure. Thus, the seal 700 is adhered to, and seals, the upper surface 203 of the joint structure 200.

Thus, an embodiment of a sealing process to seal the upper surface 203 of the joint structure 200 is provided.

Advantageously, the above described sealing process tends to reduce workload on a human operator.

The above described sealing process tends to provide for improved sealing of the joint structure. The likelihood of leakage into or out of the aircraft fuel tank tends to be reduced.

The above described sealing process tends to provide for faster sealing of the joint structure. The above described seals or seal mat may, for example, be prepared in advance of the sealing operation or an aircraft assembly operation.

The above described sealing process tends to provide for improved repeatability.

The above described sealing process tends to provide that sealant is confined to specific, desired areas by the mould part, and the likelihood of unwanted, unintended, or accidental application of sealant to other areas of the aircraft tends to be reduced. This tends to reduce or eliminate a need for post-sealing cleaning processes.

The above described sealing process tends to provide a mass-saving compared to conventional sealing operations.

The above described sealing process tends to provide improved control over the thickness of the seal. Since the sealant may be cured by radiation incident from multiple different directions (e.g. including both above and below), a fully cured seal having increased thickness tends to be achievable compared to conventional sealing processes.

The above described sealing process tends to facilitate the sealing of more complex surfaces and features. Furthermore, seals or seal mats produced by the above described methods tend to be relatively flexible (e.g. malleable or stretchable). This advantageously tends to facilitate a user fitting the seal to a surface to be sealed, and also tends to account for manufacturing tolerances in both the surface being sealed, and the seal mat itself.

Also, the above described processes and seals or seal mats tend to facilitate the sealing of surfaces having restricted user access, i.e. surfaces that are difficult for a user to access to apply sealant in a conventional manner.

Advantageously, using the above described process tends to allow for the formation, in the seal, of beneficial features. For example, the mould part may be defined such that the resulting seal comprises (e.g. on its upper surface) one or more features selected from the group of features consisting of mating surfaces, landings, or housings for receiving other entities such as, but not limited to, electronic components, cables, wires, and sensors.

Apparatus, including the computer, for implementing the above arrangement, and performing the above described method steps, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine-readable storage medium such as computer memory, a computer disk, ROM, PROM etc., or any combination of these or other storage media.

It should be noted that certain of the process steps depicted in the flowchart of Figure 3 and described above may be omitted or such process steps may be performed in differing order to that presented above and shown in Figure 3. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, the sealing process is implemented to seal a wall of a fuel tank located in an aircraft wing. However, in other embodiments, the sealing process is implemented to seal a different entity, such as a fuel tank located in a different part of an aircraft other than in a wing (such as in the fuselage), or a fuel tank located in a different entity other than an aircraft (such as a land-based or water-based vehicle), or a different type of tank or container other than a fuel tank.

In the above embodiments, the joint structure being sealed comprises two structural members attached together by a series of fasteners. However, in other embodiments, the structure to which the seal is applied is a different type of structure. For example, the structure may comprise a different number of structural members, for example, only one structural member, or more than two structural members. Also, in other embodiments, multiple structural members may be attached together in a different way other than by using fasteners, for example via an adhesive, or by welding.

In the above embodiments, the digital 3D model of the surface being sealed is created from a 3D scan of that surface. However, in other embodiments, the digital model of the surface to be sealed is created in a different way, for example based on one or more digital 3D computer aided design (CAD) models of the surface.

In the above embodiments, the mould parts are fabricated using an AM (i.e. 3D printing) process. However, in other embodiments, one or both mould parts are produced using a different process, for example a casting process and/or a computer numerical control (CNC) milling process.

In the above embodiments, the sealant is a UV-curable sealant which is cured via illumination with UV light, and both of the mould parts are transparent or translucent parts configured to allow the passage therethrough of UV light. However, in other embodiments, the sealant is a different type of sealant other than UV-curable, and it is cured in a different way. For example, in some embodiments, the sealant is configured to cure when illuminated with a different wavelength of electromagnetic radiation, such as visible light. In such embodiments, visible light may be passed through one or both of the mould parts to cure the sealant. In some embodiments, the sealant is a multi-part or multi-component sealant; the multiple parts may be mixed together prior to introduction into the mould cavity, and the mixture may then cure in the mould cavity. In some embodiments, the sealant is configured to cure under the application of heat or moisture. In such embodiments, one or both of the mould parts may be configured to allow for the transfer of heat and/or moisture from outside the mould cavity to inside the mould cavity thereby to cure the sealant. In some embodiments, one or both of the mould parts is not a transparent or translucent part, and may be opaque. In some embodiments, the sealant is a tine-cure sealant that cures within a given amount of time at, e.g. room temperature.

## Claims

1. A method of producing a seal for sealing a structure, the method comprising:
providing a mould having a mould cavity, the mould cavity having the desired shape of the seal;
introducing a sealant into the mould cavity, the sealant being an electromagnetic radiation curing sealant; and
illuminating the sealant with electromagnetic radiation by causing electromagnetic radiation to pass through at least a part of the mould onto the sealant within the mould cavity, thereby curing the sealant within the mould cavity to produce the seal.

2. The method of claim 1, wherein the electromagnetic radiation comprises ultraviolet or visible light.

3. The method of claim 1 or 2, wherein at least a part of the mould is a transparent or translucent member.

4. The method of any of claims 1 to 3, wherein the illuminating comprises illuminating the mould with the sealant therein from multiple different directions.

5. The method of any of claims 1 to 4, wherein providing the mould comprises:
measuring a surface of the structure;
using the measurements of the surface, creating a digital model of the mould; and
using the digital model of the mould, producing the mould.

6. The method of claim 5, wherein providing the mould comprises:
using the measurements of the surface, creating a digital model of a first mould part having a surface that is substantially the same shape as the measured surface;
creating a digital model of a second mould part, wherein the digital model of the first mould part and the digital model of the second mould part define a digital representation of the mould cavity;
using the digital model of the first mould part, producing a physical first mould part; and,
using the digital model of the second mould part, producing a physical second mould part.

7. The method of any of claims 1 to 6, wherein providing the mould comprises performing an additive manufacturing process to fabricate the mould using one or more digital models.

8. The method of any of claims 1 to 7, wherein the mould defines one or more features selected from the group of features consisting of mating surfaces, landings, and housings for receiving other entities, such that the seal comprises the one or more features.

9. The method of any of claims 1 to 8, wherein the structure is a wall of an aircraft fuel tank comprising multiple structural components attached together by a plurality of fasteners.

10. The method of any of claims 1 to 9, further comprising attaching the seal to the structure, thereby to seal the structure.

11. The method of claim 10, wherein attaching the seal to the structure comprises applying an adhesive between the seal and the structure, and subsequently curing the adhesive.

12. The method of claim 11, wherein the adhesive is a time-curable adhesive.

13. A seal produced in accordance with the method of any of claims 1 to 12.

14. Apparatus for producing a seal for sealing a structure, the apparatus comprising:
a mould having a mould cavity, the mould cavity having the desired shape of the seal;
means for introducing a sealant into the mould cavity, the sealant being an electromagnetic radiation curing sealant; and
a source of electromagnetic radiation for illuminating the sealant with electromagnetic radiation by causing electromagnetic radiation to pass through at least a part of the mould onto the sealant within the mould cavity, thereby to cure the sealant within the mould cavity and produce the seal.

15. The apparatus according to claim 14, further comprising means for providing the mould, the means for proving the mould comprising:
a three-dimensional scanner for measuring the surface of the structure;
one or more processors for, using the measurements of the surface, creating a digital model of the mould; and
additive manufacturing apparatus configured to, using the digital model, produce the mould.
